# EUROPÄISCHE PATENTSCHRIFT

(11) **EP 1 682 784 B1**
(45) Veröffentlichungstag und Bekanntmachung des Hinweises auf die Patenterteilung: **13.01.2010**
(21) Anmeldenummer: 04790436.2
(22) Anmeldetag: 15.10.2004
(51) Int. Cl.: F16C 33/44

(54) **KUGELLAGER**
BALL BEARING
ROULEMENT A BILLES

(30) Priorität: 31.10.2003 DE 10351346
(43) Veröffentlichungstag der Anmeldung: 26.07.2006
(73) Patentinhaber: myonic GmbH, 88299 Leutkirch (DE)
(72) Erfinder: MOESLE, Peter, 88299 Leutkirch (DE)
(74) Vertreter: Vonnemann, Gerhard
(86) Internationale Anmeldenummer: PCT/EP2004/011580
(87) Internationale Veröffentlichungsnummer: WO 2005/047719

(56) Entgegenhaltungen:
- DE-A- 1 933 228
- US-A- 3 744 862
- US-A- 4 541 739
- US-A1- 2003 022 797

## Beschreibung

Die Erfindung betrifft ein Kugellager mit einem Innenring und einem koaxial dazu angeordneten Außenring, wobei zwischen Innenring und Außenring Lagerkugeln angeordnet sind, die mittels eines Käfigs geführt sind, wobei der Käfig aus einem Verbundmaterial besteht.

Ein derartiges Kugellager ist aus der DE 1 933 228 A bekannt. Solche Kugellager wurden und werden in vielen Bereichen der Technik eingesetzt. Dabei hat sich herausgestellt, dass in den meisten Fällen der Kugellagerkäfig das die Lebensdauer des Kugellagers begrenzende Bauteil ist. Dies ist damit zu erklären, dass der Käfig enormen Krafteinwirkungen ausgesetzt ist. Er steht abwechselnd oder gleichzeitig in Kontakt mit den schnell rotierenden Kugeln, sowie mit dem Innenring und/oder dem Außenring, wobei Innenring und/oder Außenring ebenfalls um eine Drehachse rotieren. Diesen Belastungen, insbesondere bei hohen Drehzahlen von einem der Ringe von etwa 500 000 Umdrehungen pro Minute, halten Käfige aus herkömmlichen Verbundmaterial nicht auf Dauer stand. Besonders schwierig gestaltet sich die Verwendung von herkömmlichen Verbundmaterialien bei Anwendungen, bei denen das Kugellager zumindest zeitweise einer erhöhten Temperatur, einem erhöhten Druck und einem erhöhten Luftfeuchtigkeitsgehalt ausgesetzt ist. Insbesondere Kugellager in der Medizintechnik müssen diesen Bedingungen standhalten, da die Geräte mit den Kugellagern häufig autoklaviert werden müssen. Hierbei ist ein Druck von 1 bar, eine Temperatur größer oder gleich 134° C, sowie eine gesättigte Dampfatmosphäre über einen Zeitraum von etwa drei Minuten vorgeschrieben. Kugellagerkäfige aus herkömmlichen Verbundmaterial wie Phenolharz in Kombination mit Baumwollfasern halten diesen Bedingungen nicht oder nicht lange stand. Es kommt zu Auflösungsprozessen, die die Zerstörung des gesamten Kugellagers zur Folge haben.

Daher wurden Kugellagerkäfige aus PEEK (Polyetheretherketon) oder PI (Polyimid) oder PAI (Polyamidimid) entwickelt. Kugellagerkäfige aus einem dieser Materialien haben jedoch den Nachteil, dass sie keine Notlaufeigenschaften aufweisen. Im Gegensatz zu den bekannten Verbundmaterial aus Phenolharz und Baumwollfasern enthalten die genannten Käfigmaterialien keine Fasern, so dass kein Schmiermittel im Käfig selbst gespeichert werden kann. Dies führt zur unmittelbaren Zerstörung des Kugellagers, wenn kein Schmiermittel mehr im Kugellager vorhanden ist. Kugellagerkäfige aus Phenolharz und Baumwollfasern geben jedoch in einer solchen Situation kleine Mengen des gespeicherten Schmiermittels an die Laufflächen und/oder die Kugeln ab, so dass die Lebensdauer des Kugellagers erheblich verlängert werden kann. Wie bereits erwähnt haben jedoch Kugellager mit einem Kugellagerkäfig aus Phenolharz und Baumwollfasern den Nachteil, dass sie den Belastungen denen ein Kugellager, insbesondere in der Medizintechnik, ausgesetzt ist, nur bedingt standhalten.

Die Aufgabe der Erfindung besteht darin ein Kugellager vorzuschlagen, welches eine lange Lebensdauer mit Notlaufeigenschaften vereint.

Die der Erfindung zugrunde liegende Aufgabe wird dadurch gelöst, dass das Verbundmaterial wärmegehärtetes Epoxidharz sowie Fasern in Form von Vlies enthält, das mit Schmiermittel aufgefüllt ist. Es hat sich herausgestellt, dass Epoxidharz den extremen Belastungen, denen ein Kugellagerkäfig ausgesetzt ist, über eine lange Zeit standhalten kann. Dies ist insbesondere deshalb wichtig, da beispielsweise in der Medizintechnik, insbesondere in der Dentaltechnik, die Bauteile, die mit dem Patienten direkt in Kontakt kommen, nach jeder Anwendung autoklaviert werden sollten. Bei dem Autoklavierprozess müssen diese Bauteile, inklusive der Kugellager über einen Zeitraum von mehreren Minuten einer Temperatur von mehr als 134° C, sowie einem Druck von etwa 1 bar bei gesättigtem Wasserdampf standhalten. Es wird heute von der Industrie gefordert, dass die Bauteile und damit die Kugellager mehr als 2 000 Autoklavierzyklen standhalten müssen. Diesen Anforderungen wird nur ein Kugellagerkäfig aus Verbundmaterial gerecht, welches Expoxidharz sowie Fasern enthält. Durch die enthaltenen Fasern wird die Notlaufeigenschaft des Kugellagerkäfigs gewährleistet. Sollte das Schmiermittel im Kugellager zur Neige gehen, so geben die im Epoxidharz enthaltenen Fasern gespeichertes Schmiermittel an die Laufflächen und/oder die Kugeln ab. Das Kugellager mit einem Kugellagerkäfig aus Epoxidharz sowie Fasern garantiert eine lange Lebensdauer sowie Notlaufeigenschaften. Der Kugellagerkäfig kann beispielsweise als Kronen- oder Kammkäfig oder als Massivkäfig ausgebildet werden.

Damit die erfindungsgemäßen Kugellager auch medizintechnischen Anforderungen genügen ist mit Vorteil vorgesehen, dass das Expoxidharz temperaturbeständig ist bei einer Temperatur größer 130 °C, insbesondere bei einer Temperatur größer oder gleich 134 °C und/oder dass das Expoxidharz druckbeständig ist, insbesondere bei Drücken um oder über 1 bar und/oder dass das Expoxidharz feuchtigkeitsbeständig ist, insbesondere beständig bei einer gesättigten Dampfatmosphäre. Diese Temperaturen, Drücke und Feuchtigkeitsgehalte treten bei Autoklavierprozessen in Kombination auf. Erfindungsgemäß werden hierzu warmgehärtete Epoxydharze eingesetzt. Es ist weiterhin von großem Vorteil, wenn die Fasern ebenfalls diesen Temperaturen, Drücken und Feuchtigkeitsgehalten standhalten. Dabei wird gefordert, dass das Epoxidharz, sowie die Fasern den Temperaturen, den Drücken und Feuchtigkeitsgehalten über einen Zeitraum von mehreren Minuten, insbesondere von etwa drei Minuten, standhalten. Das Verbundmaterial muss ca. 2000 Autoklavierzyklen überstehen. Entscheidend ist, dass das Verbundmaterial den plötzlichen Parameterveränderungen durch den schlagartig einströmenden heißen Wasserdampf standhält. Es liegt selbstverständlich auch im Rahmen der Erfindung, dass das Verbundmaterial den genannten Parametern in beliebiger Kombination oder einzelnen Parametern allein für sich standhält.

Um eine besonders lange Lebensdauer zu gewährleisten ist in Weiterbildung der Erfindung vorgesehen, dass das Verbundmaterial vollständig aus Epoxidharz sowie Fasern besteht. Hierdurch wird der Einsatz von Materialien mit geringerer Lebensdauer vermieden.

Es ist mit Vorteil vorgesehen, dass die Fasern Naturfasern und/oder synthetische Fasern sind. Als Naturfasern kommen beispielsweise pflanzliche Fasern wie Baumwolle oder tierische Fasern wie Wolle in Betracht. Baumwolle hat den Vorteil, dass es sich um ein sehr temperaturbeständiges Material handelt. Als synthetische Fasern kommen beispielsweise Polyamidfasern zum Einsatz, da diese neben hoher Temperaturbeständigkeit auch eine hohe Druck- und Feuchtigkeitsbeständigkeit aufweisen. Die Fasern dienen dazu Schmiermittel aufzunehmen.

Um die Festigkeit des Kugellagerkäfigs zu erhöhen, ist mit Vorteil vorgesehen, dass die Fasern als, insbesondere bahnförmiges, Trägermaterial für das Epoxidharz ausgebildet sind. Das Trägermaterial zeichnet sich dadurch aus, dass die Fasern miteinander in Verbindung stehen. Das Trägermaterial wird beim Herstellungsprozess in Epoxidharz getränkt und auf einen beheizten Dom aufgewickelt. Daraufhin wird der Dom entfernt und die verbleibende Röhre wird unter Druck und erhöhten Temperaturen ausgehärtet. Durch den Faserverbund erhält der Kugellagerkäfig eine besonders gute Festigkeit.

Eine besonders gute Verbindung der Fasern mit dem Epoxidharz wird dadurch erreicht, dass das Trägermaterial als Vlies ausgebildet ist. Vlies hat eine besonders große reaktive Oberfläche, da Vlies aus ausgerichteten oder wahllos zueinander angeordneten Fasern besteht, die durch Reibung und/oder Kohäsion und/oder Adhäsion miteinander verbunden sind. Durch die Verwendung von Vlies als Trägermaterial wird eine besonders gute Verbindung der Trägermaterialbahn beim Aufwickelprozess auf den beheizten Dom erreicht. Ablösungen von einzelnen aufgewickelten Schichten werden mit Vorteil vermieden.

Damit die Notlaufeigenschaften des Kugellagerkäfigs von Beginn an gegeben sind, ist der Käfig mit Schmiermittel aufgefüllt. Dabei wird der Kugellagerkäfig vorteilhafterweise einem Vakuum ausgesetzt, so dass das Schmiermittel besonders schnell in den Käfig eindringt. Würde man allein auf die Kapillarkräfte vertrauen, so wäre die Notlaufeigenschaft nicht von Anfang an gegeben.

Der Einsatz der Kugellagerkäfige, bestehend aus Epoxidharz sowie Fasern, erfolgt nach der Erfindung in Miniaturkugellagern, die einen Außendurchmesser kleiner oder gleich dreißig Millimeter aufweisen. Hierbei handelt es sich meist um Kugellager, die enormen

Drehzahlbelastungen ausgesetzt sind.

Die erfindungsgemäßen Kugellager sind für den Einsatz in der Dentaltechnik geeignet, da in diesen Bereichen extremen Belastungen standgehalten werden muss. Drehzahlen eines der Ringe von etwa 500.000 Umdrehungen pro Minute und mehr sind keine Seltenheit.

Anhand der einzigen Figur, die ein Ausführungsbeispiel der Erfindung zeigt, wird die Erfindung im Detail beschrieben.

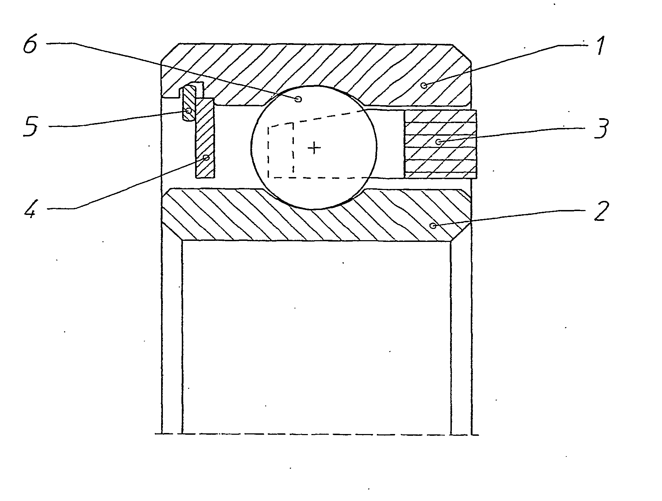

Die Figur 1 zeigt einen Schnitt durch ein Kugellager. Zwischen Außenring 1 und koaxial dazu angeordnetem Innenring 2 sind Kugellagerkugeln 6 angeordnet, die mittels des Kugellagerkäfigs 3 geführt und auf Abstand zueinander gehalten werden. Am unteren Ende der Figur ist die Drehachse angedeutet. Der Kugellagerkäfig 3 ist in diesem Ausführungsbeispiel als Kronenkäfig ausgebildet. Selbstverständlich ist die Ausbildung des Käfigs 3 auch als Massivkäfig möglich. Auf der linken Seite des Kugellagers ist ein Sprengring 5 mit daneben angeordneter Deckscheibe 4 vorgesehen.

Der Kugellagerkäfig 3 besteht vollständig aus Verbundmaterial bestehend aus Epoxidharz und synthetischen, als Vlies angeordneten Fasern. Nimmt man an, dass der Außenring fixiert ist und sich der Innenring 2 mit einer Drehzahl von 500 000 Umdrehungen pro Minute dreht, so drehen sich die Kugeln um ihre eigene Achse mit einer Drehzahl von ca. 1 000 000 Umdrehungen pro Minute (Faktor 2),
wobei der Kugellagerkäfig 3 mit einer Drehzahl von ca. 200 000 Umdrehungen pro Minute (Faktor 0,4) um die Drehachse rotiert. Auf den Kugellagerkäfig 3 wirken dabei enorme Kräfte, da er ständig in Berührung mit den schnell rotierenden Kugeln 6, dem fixierten Außenring 1, sowie dem schnell rotierenden Innenring 2 steht. Der Kugellagerkäfig 3 bestehend aus Epoxidharz sowie Fasern hält diesen Belastungen stand und gibt durch die Fasern im Bedarfsfall Schmiermittel an die Kugel und/oder den Außen- 1 bzw. den Innenring 2 ab. Durch diese sogenannten Notlaufeigenschaften wird die Lebensdauer des gesamten Kugellagers wesentlich erhöht.

### BEZUGSZEICHENLISTE

- 1: Außenring
- 2: Innenring
- 3: Kugellagerkäfig
- 4: Deckscheibe
- 5: Sprengring
- 6: Kugeln

## Patentansprüche

1. Kugellager für die Dentaltechnik, mit Drehzahlen von etwa 500.000 Umdrehungen pro Minute, mit einem Innenring (2) und einem koaxial dazu angeordneten Außenring (1), wobei zwischen Innenring (2) und Außenring (1) Lagerkugeln (6) angeordnet sind, die mittels eines Käfigs (3) geführt sind, wobei der Käfig (3) aus einem Verbundmaterial besteht, **dadurch gekennzeichnet, dass** das Verbundmaterial wärmegehärtetes Epoxidharz sowie Fasern, in Form von Vlies- enthält das mit Schmiermittel aufgefüllt ist und dass das Kugellager ein Miniaturkugellager mit einem Außendurchmesser kleiner oder gleich dreißig Millimeter ist, insbesondere einen Außendurchmesser zwischen etwa 6 mm und 12 mm aufweist.

2. Kugellager nach Anspruch 1, **dadurch gekennzeichnet, dass** das Expoxidharz temperaturbeständig ist bei einer Temperatur größer 130 °C, insbesondere bei einer Temperatur größer oder gleich 134 °C und/oder dass das Expoxidharz druckbeständig ist, insbesondere bei Drücken um oder über 1 bar, und/oder dass das Expoxidharz feuchtigkeitsbeständig ist, insbesondere beständig bei einer gesättigten Dampfatmosphäre.

3. Kugellager nach einem der vorhergehenden Ansprüchen, **dadurch gekennzeichnet, dass** das Verbundmaterial vollständig aus Epoxidharz sowie Fasern besteht.

4. Kugellager nach einem der vorhergehenden Ansprüchen, **dadurch gekennzeichnet, dass** die Fasern Naturfasern und/oder synthetische Fasern sind.

5. Kugellager nach einem der vorhergehenden Ansprüche, **dadurch gekennzeichnet, dass** die Fasern als, insbesondere bahnförmiges, Trägermaterial für das Epoxidharz ausgebildet sind.

## Claims

1. A ball bearing for dental technology, operated at rotational speeds of approximately 500 000 revolutions per minute, having an inner ring (2) and an outer ring (1) which is arranged coaxially therewith, wherein between the inner ring (2) and the outer ring (1), bearing balls (6) are arranged which are guided by means of a cage (3), wherein the cage (3) consists of a composite material, **characterized in that** the composite material contains thermoset epoxy resin as well as fibres - in the form of fleece - which is filled with lubricant and **in that** the ball bearing is a miniature ball bearing with an external diameter of thirty millimetres or less, in particular an external diameter in the range from approximately 6 mm to 12 mm.

2. The ball bearing according to claim 1, **characterized in that** the epoxy resin is heat resistant at a temperature of more than 130°C, in particular at a temperature of 134°C or more and/or **in that** the epoxy resin is pressure resistant, in particular at pressures of 1 bar or more, and/or **in that** the epoxy resin is moisture resistant, in particular resistant to a saturated steam atmosphere.

3. The ball bearing according to one of the preceding claims, **characterized in that** the composite material is completely constituted by epoxy resin as well as fibres.

4. The ball bearing according to one of the preceding claims, **characterized in that** the fibres are natural fibres and/or synthetic fibres.

5. The ball bearing according to one of the preceding claims, **characterized in that** the fibres are formed as a support, in particular web-like, material for the epoxy resin.

## Revendications

1. Roulement à billes pour la technique dentaire, ayant des vitesses de rotation d'environ 500 000 rotations par minute, comportant un anneau intérieur (2) et un anneau extérieur (1) disposé coaxialement par rapport à celui-ci, étant disposées entre l'anneau intérieur (2) et l'anneau extérieur (1) des billes de palier (6) qui sont guidées au moyen d'une cage (3), la cage (3) étant composée d'un matériau composite, **caractérisé en ce que** le matériau composite contient de la résine époxyde durcie à chaud ainsi que des fibres sous forme de non-tissé chargé de lubrifiant et que le roulement à billes est un palier à billes miniature ayant un diamètre extérieur inférieur ou égal à trente millimètres, notamment un diamètre extérieur compris entre environ 6 mm et 12 mm.

2. Roulement à billes selon la revendication 1, **caractérisé en ce que** la résine époxyde résiste à la chaleur à une température supérieure à 130° C, notamment à une température supérieure ou égale à 134° C et/ou que la résine époxyde résiste à la pression, notamment à des pressions avoisinant ou supérieures à 1 bar et/ou que la résine époxyde résiste à l'humidité, notamment résiste à une atmosphère saturée de vapeur.

3. Roulement à billes selon une des revendications précédentes, **caractérisé en ce que** le matériau composite est entièrement composé de résine époxyde et de fibres.

4. Roulement à billes selon une des revendications précédentes, **caractérisé en ce que** les fibres sont des fibres naturelles et/ou des fibres synthétiques.

5. Roulement à billes selon une des revendications précédentes, **caractérisé en ce que** les fibres se présentent notamment sous forme de matériau porteur en forme de bande pour la résine époxyde.
